# EUROPÄISCHE PATENTSCHRIFT

(11) **EP 2 305 438 B1**
(45) Veröffentlichungstag und Bekanntmachung des Hinweises auf die Patenterteilung: **26.08.2015**
(21) Anmeldenummer: 10013251.3
(22) Anmeldetag: 02.10.2010
(51) Int. Cl.: B27B 17/00, F16F 1/373, F16F 1/376, F16F 1/42, B25F 5/00

(54) **Arbeitsgerät**
Work device
Appareil de travail

(30) Priorität: 05.10.2009 DE 102009048322
(43) Veröffentlichungstag der Anmeldung: 06.04.2011
(73) Patentinhaber: Andreas Stihl AG & Co. KG, 71336 Waiblingen (DE)
(72) Erfinder: Wolf, Günter, 71570 Oppenweiler (DE); Menzel, Johannes, 73249 Wernau (DE); Steidinger, Ralf, 70329 Stuttgart (DE); Guip, Andreas, 71332 Waiblingen (DE); Eberhardt, Maximilian, 73732 Esslingen (DE)
(74) Vertreter: Wasmuth, Rolf

(56) Entgegenhaltungen:
- DE-A1- 4 011 854
- DE-U1- 8 913 638
- DE-U1-202005 006 350
- FR-A1- 2 352 643
- GB-A- 1 307 509
- JP-A- S61 218 844
- US-A- 3 845 557

## Beschreibung

Die Erfindung betrifft ein Arbeitsgerät gemäß dem Oberbegriff des Anspruchs 1.

Eine solche Vorrichtung ist aus US 3845557 A1 bekannt.

Es ist bekannt, bei Arbeitsgeräten mit mindestens einem Handgriff, die im Betrieb üblicherweise von Hand geführt werden, Antivibrationselemente zwischen dem Antriebsmotor und dem Handgriff vorzusehen, um die im Betrieb entstehenden Schwingungen zu dämpfen.

**Die** US 3,845,557 **zeigt eine Motorsäge mit Antivibrationselementen, die topfförmig ausgebildet sind. Die Antivibrationselemente sind an einem ins Innere des Antivibrationselements ragenden Stutzen am Motorgehäuse festgelegt und in einer topfförmigen Aufnahme des Griffgehäuses gehalten. Das Antivibrationselement besitzt ringförmige, sich nach innen und außen erstreckende Rippen zur Anlage am Griffgehäuse beziehungsweise am Stutzen des Motorgehäuses.**

**Die** FR 2 352 643 **zeigt eine Motorsäge mit topfförmig ausgebildeten Antivibrationselementen, die mit einem Ende am Griffgehäuse und mit dem anderen Ende am Motorgehäuse festgelegt sind. Die Antivibrationselemente besitzen jeweils einen sich konisch erweiternden Abschnitt.**

Aus der DE 20 2005 006 350 U1 ist ein Bodenverdichter bekannt, der einen Anschlagpuffer besitzt. Der Anschlagpuffer ist zylindrisch ausgebildet und besitzt an seiner Anschlagfläche eine Fase.

Es hat sich gezeigt, dass bei derartigen Anschlagpuffern besonders bei Arbeitsgeräten, bei denen die Wandstärken der Anschlagpuffer vergleichsweise gering ausgebildet sein müssen, die Wand einknicken kann. Dadurch wird nur eine unzureichende Dämpfungswirkung erreicht.

Der Erfindung liegt die Aufgabe zugrunde, ein Arbeitsgerät der gattungsgemäßen Art zu schaffen, bei dem eine gute Dämpfung der im Betrieb entstehenden Schwingungen erreicht wird.

Diese Aufgabe wird durch ein Arbeitsgerät mit den Merkmalen des Anspruchs 1 gelöst.

Der sich ringförmig nach außen erweiternde Dämpfungsabschnitt verhindert ein seitliches Wegknicken des Antivibrationselements. Der Dämpfungsabschnitt trägt in der Regel über seinen gesamten Umfang zur Dämpfungswirkung bei, so dass sich ein gutes Dämpfungsverhalten ergibt. Die ringförmige, sich nach außen erweiternde Gestaltung führt zu einer progressiven Dämpfungskennlinie, die für Arbeitsgeräte wünschenswert ist. Die ringförmige Wand kann sich dabei linear oder auch bogenförmig erweitern. Die Wand erweitert sich dabei vorteilhaft kontinuierlich, also ohne Stufen oder sprunghafte Durchmesserveränderungen.

**D**ie Wandstärke und der Öffnungsgrad des Dämpfungsabschnitts sind so aufeinander abgestimmt, dass der Dämpfungsabschnitt, sich bei Überschreiten einer konstruktiv vorgegebenen, im Betrieb wirkenden Kraft nach außen wegstülpt, so dass das zweite Gehäuseteil an einer Innenseite der Wand des Dämpfungsabschnitts anliegt. Bei größeren Kräften wird dadurch eine erhöhte Stabilität des Antivibrationselements durch die Anlage an der Innenseite der Wand des Dämpfungsabschnitts erreicht.

Vorteilhaft beträgt der Außendurchmesser des Dämpfungsabschnitts an der dem ersten Gehäuseteil zugewandten Seite etwa 70% bis etwa 90% des Außendurchmessers an der dem zweiten Gehäuseteil zugewandten Seite. Als besonders vorteilhaft hat sich ein Verhältnis der Außendurchmesser von etwa 80% erwiesen. Die Höhe des Dämpfungsabschnitts beträgt vorteilhaft etwa 20% bis etwa 80% des Außendurchmessers an der dem zweiten Gehäuseteil zugewandten Seite. Die Höhe des Dämpfungsabschnitts ist demnach kleiner als der größte Außendurchmesser des Dämpfungsabschnitts. Dadurch ergeben sich gute Dämpfungseigenschaften und eine hohe Stabilität des Dämpfungsabschnitts. Vorteilhaft beträgt die Höhe des Dämpfungsabschnitts etwa 30% bis etwa 60% des größten Außendurchmessers. Als besonders vorteilhaft hat sich eine Höhe des Dämpfungsabschnitts von etwa 35% bis etwa 45% des größten Außendurchmessers herausgestellt. Die Wandstärke des Dämpfungsabschnitts beträgt vorteilhaft etwa 10% bis etwa 30% des Außendurchmessers an der dem zweiten Gehäuseteil zugewandten Seite. Diese vergleichsweise dünne Ausbildung des Dämpfungsabschnitts erlaubt ein Wegstülpen nach außen. Gleichzeitig wird eine ausreichend hohe Stabilität und gute Dämpfungswirkung erreicht. Vorteilhaft liegt das Antivibrationselement in unbelastetem Zustand des Arbeitsgeräts an dem zweiten Gehäuseteil an. In unbelastetem Zustand wirkt das Antivibrationselement demnach zwischen den beiden Gehäuseteilen. Beim Auseinanderziehen der beiden Gehäuseteile ergibt sich ein Abstand, und das Antivibrationselement kommt nicht mehr zur Anlage an dem zweiten Gehäuseteil und trägt nicht zur Dämpfungswirkung bei. Das Antivibrationselement wirkt damit als Anschlagpuffer. Ein vorteilhaftes Dämpfungsverhalten wird erreicht, wenn das Antivibrationselement einen Anschlag besitzt, der in unbelastetem Zustand des Arbeitsgeräts zu dem zweiten Gehäuseteil einen Abstand aufweist. Bei sehr geringen Schwingungen liegt das Antivibrationselement an dem zweiten Gehäuseteil an. Dadurch ergibt sich eine vergleichsweise weiche Dämpfung. Sobald der Abstand des Anschlags zum Gehäuseteil überwunden ist, kommt auch der Anschlag zur Anlage an das zweite Gehäuseteil. Ab diesem Punkt ergibt sich eine vergleichsweise große Dämpfung. Dadurch kann auf einfache Weise ein progressives Dämpfungsverhalten erreicht werden. Werden die beiden Gehäuseteile nicht aufeinander zu bewegt, sondern auseinander gezogen, hebt das Antivibrationselement von dem zweiten Gehäuseteil ab und trägt nicht mehr zur Dämpfungswirkung zwischen den beiden Gehäuseteilen bei.

Eine vorteilhafte Anordnung ergibt sich, wenn der Anschlag innerhalb des ringförmigen Dämpfungsabschnitts angeordnet ist. So wird eine geringe, kompakte Baugröße erreicht. Zweckmäßig besitzt das Antivibrationselement einen Grundkörper, an dem der Dämpfungsabschnitt angeformt ist. Der Anschlag ist vorteilhaft an einem vorstehenden Abschnitt des Grundkörpers ausgebildet. Um die Montage des Antivibrationselements zu erleichtern, ist vorgesehen, dass das Antivibrationselement eine Montageöffnung aufweist. An der Montageöffnung kann das Antivibrationselement beispielsweise mit einem Schraubendreher aufgenommen und dann an dem ersten Gehäuseteil montiert werden. Zweckmäßig ist die Montageöffnung im Bereich des Anschlags angeordnet. Die Montageöffnung kann insbesondere von dem Anschlag umgeben sein.

Es hat sich gezeigt, dass sich der Dämpfungsabschnitt bei einer glatten Wand des zweiten Gehäuseteils nach Art eines Saugnapfs an dem zweiten Gehäuseteil festsaugen kann. Dadurch kann die Dämpfungswirkung verschlechtert werden. Um ein Festsaugen des Dämpfungsabschnitts zu vermeiden, ist vorgesehen, dass der Dämpfungsabschnitt an einem dem zweiten Gehäuseteil zugewandten Rand mindestens eine Erhöhung besitzt, die zur Anlage an dem zweiten Gehäuseteil ausgebildet ist. Durch die Erhöhung wird die Bildung eines Vakuums zwischen dem Dämpfungsabschnitt und dem zweiten Gehäuseteil vermieden. Zweckmäßig erstreckt sich die Erhöhung auch an der Innenseite an der Wand des Dämpfungsabschnitts, so dass, auch wenn sich der Dämpfungsabschnitt nach außen wegstülpt, ein Festsaugen am zweiten Gehäuseteil verhindert ist. Eine einfache Gestaltung ergibt sich, wenn drei über den Umfang verteilt angeordnete Erhöhungen vorgesehen sind.

Vorteilhaft ist das Antivibrationselement einteilig ausgebildet und besteht aus einem elastischen Material. Um eine einfache Montage des Antivibrationselements an dem ersten Gehäuseteil zu ermöglichen, ist vorgesehen, dass das Antivibrationselement an der dem Dämpfungsabschnitt gegenüberliegenden Seite einen Stutzen aufweist, mit dem das Antivibrationselement in eine Öffnung des ersten Gehäuseteils eingeknüpft ist. Dadurch werden keine zusätzlichen Mittel zur Befestigung des Antivibrationselements benötigt.

Ein Ausführungsbeispiel der Erfindung wird im Folgenden anhand der Zeichnung erläutert. Es zeigen:
- Fig. 1: eine schematische Darstellung einer Motorsäge,
- Fig. 2: einen Schnitt durch eine Motorsäge auf der Höhe der Linie II-II in Fig. 1,
- Fig. 3 bis Fig. 5: ausschnittsweise Darstellungen der Schnittdarstellung aus Fig. 2 im Bereich des Antivibrationselements in unterschiedlichen Lagen der Gehäuseteile,
- Fig. 6: eine perspektivische Darstellung des Antivibrationselements,
- Fig. 7: eine Seitenansicht des Antivibrationselements,
- Fig. 8: einen Schnitt entlang der Linie VIII-VIII in Fig. 7.

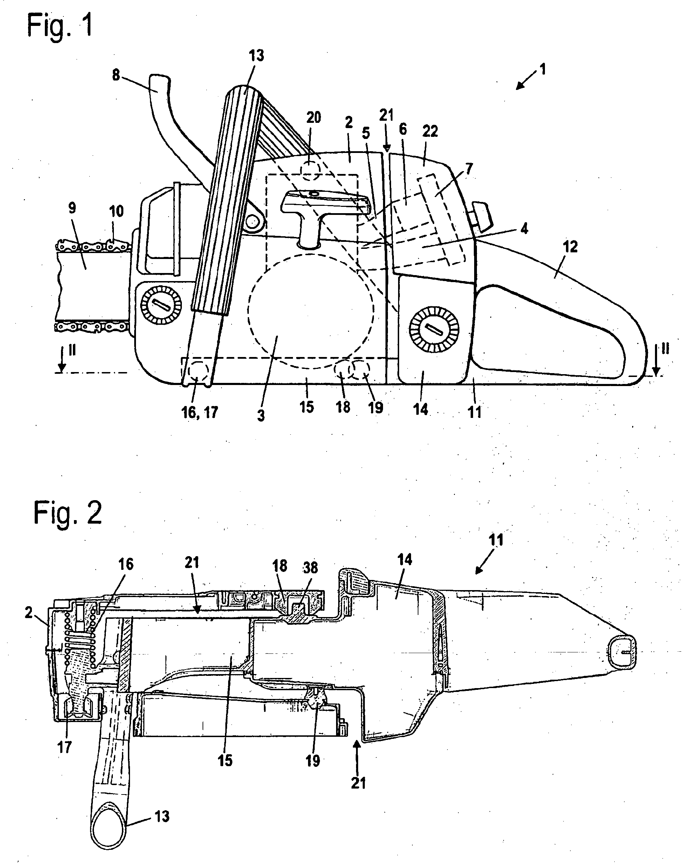

Fig. 1 zeigt als Ausführungsbeispiel für ein Arbeitsgerät eine handgeführte Motorsäge 1. Das Arbeitsgerät kann jedoch auch ein Trennschleifer oder dgl. handgeführtes Arbeitsgerät sein. Die Motorsäge 1 besitzt ein Motorgehäuse 2, in dem ein Antriebsmotor 3 angeordnet ist. Der Antriebsmotor 3 ist als mit Spülvorlage arbeitender Zweitaktmotor ausgebildet und besitzt einen Luftkanal 4 zur Zufuhr von weitgehend kraftstofffreier Verbrennungsluft sowie einen Gemischkanal 5, dem über einen Vergaser 6 Kraftstoff/Luft-Gemisch zugeführt wird. Der Gemischkanal 5 und der Luftkanal 4 sind mit einem in einem Luftfilterkasten 22 angeordneten Luftfilter 7 verbunden. Am Motorgehäuse 2 ist eine Führungsschiene 9 festgelegt, in der eine Sägekette 10 umlaufend geführt ist. Die Sägekette 10 wird vom Antriebsmotor 3 angetrieben. Am Motorgehäuse 2 ist außerdem ein Handschutz 8 schwenkbar gelagert, der eine nicht gezeigte Kettenbremse auslöst.

Die Motorsäge 1 besitzt zum Führen im Betrieb einen hinteren Handgriff 12 und ein Griffrohr 13. Der hintere Handgriff 12 und das Griffrohr 13 sind Teil eines Griffgehäuses 11, das auch einen Kraftstofftank 14 und einen Ausleger 15 umfasst. Der Ausleger 15 erstreckt sich in Längsrichtung der Motorsäge 1 an der Unterseite des Motorgehäuses 2 und wird vom Motorgehäuse 2 übergriffen.

Im Betrieb entstehen durch den Antriebsmotor 3 und die angetriebene Sägekette 10 Vibrationen. Diese sollen nicht oder nur gedämpft auf das Griffgehäuse 11 übertragen werden. Hierzu sind zwischen dem Griffgehäuse 11 und dem Motorgehäuse 2 Antivibrationselemente 16, 17, 18, 19 und 20 angeordnet. Um Relativbewegungen des Motorgehäuses 2 gegenüber dem Griffgehäuse 11 zuzulassen, ist zwischen dem Motorgehäuse 2 und dem Griffgehäuse 11 ein Schwingspalt 21 gebildet. Wie Fig. 1 zeigt, ist auch der Luftfilterkasten 22 mit dem Griffgehäuse 11 verbunden, so dass der Gemischkanal 5 und der Luftkanal 4 den Schwingspalt 21 überbrücken müssen.

Fig. 2 zeigt die Anordnung der Antivibrationselemente 16, 17, 18 und 19. Die Antivibrationselemente 16 und 17 sind am vorderen Ende des Auslegers 15 angeordnet. Das Antivibrationselement 16 ist als Schraubenfeder-Antivibrationselement ausgebildet, und das Antivibrationselement 17 ist aus einem elastischen Material, beispielsweise einem geschäumten Kunststoff gebildet. Das Antivibrationselement 18 ist in einer Aufnahme des Motorgehäuses 2 gehalten und wirkt mit einem Stutzen 38 zusammen, der in radialer Richtung als Anschlag wirkt. Das Antivibrationselement 18 ist benachbart zum Kraftstofftank und auf der Seite der Motorsäge 1 angeordnet, an der die Führungsschiene 9 nach vorne ragt. Auf der gegenüberliegenden Seite des Auslegers 15 ist das Antivibrationselement 19 vorgesehen, dessen Aufbau im Folgenden noch näher erläutert wird.

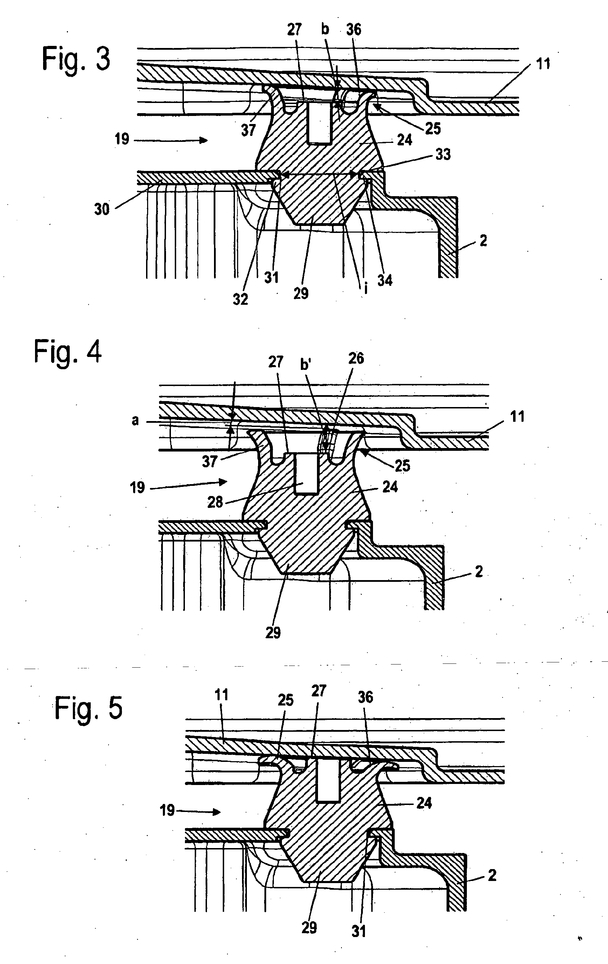

Wie Fig. 3 zeigt, ist das Antivibrationselement 19 an dem Motorgehäuse 2 gehalten. Hierzu besitzt das Motorgehäuse 2 eine Öffnung 31, in die ein Stutzen 29 des Antivibrationselements 19 eingeknüpft ist. Der Stutzen 29 ragt dabei ins Innere des Motorgehäuses 2. Das Antivibrationselement 19 besitzt einen Grundkörper 24, an dem der Stutzen 29 angeformt ist. Zwischen dem Grundköper 24 und dem Stutzen 29 ist eine Nut 32 gebildet, in die eine Gehäusewand 30 des Motorgehäuses 2, in de die Öffnung 31 ausgebildet ist, eingreift. Wie Fig. 3 zeigt, besitzt das Antivibrationselement 19 am Grundkörper 24 eine Anlagefläche 33, die außen an der Gehäusewand 30 anliegt und am Stutzen 29 eine an der Innenseite der Gehäusewand 30 anliegende Anlagefläche 34. Die Anlagefläche 33 ist dabei größer ausgebildet als die Anlagefläche 34, da auf das Antivibrationselement 19 im Wesentlichen Druckkräfte vom Griffgehäuse 11 ausgeübt werden.

An der dem Griffgehäuse 11 zugewandten Seite ist am Grundkörper 24 ein Dämpfungsabschnitt 25 angeformt. Der Dämpfungsabschnitt 25 besitzt eine Wand 37, die umlaufend und ringförmig ausgebildet ist und die sich in Richtung auf das Griffgehäuse 11 kontinuierlich erweitert. Der Dämpfungsabschnitt 25 kann dabei etwa konisch und im Wesentlichen hohl ausgebildet sein. Das Antivibrationselement 19 ist - bis auf im Folgenden noch näher beschriebene Erhöhungen 29 - rotationssymmetrisch zu einer Längsmittelachse 23 ausgebildet. Der Abstand der Wand 37 zur Längsmittelachse 23 nimmt im Dämpfungsabschnitt 25 mit zunehmendem Abstand zum Motorgehäuse 2 kontinuierlich zu. Die Wand 37 kann dabei in Längsrichtung gerade oder gebogen verlaufen.

In den Dämpfungsabschnitt 25 ragt ein Anschlag 27, der an einer Erhebung des Grundkörpers 24 angeformt ist. Der Grundkörper 24 weist eine Montageöffnung 28 auf, die etwa mittig am Anschlag 27 mündet und ins Innere des Grundkörpers 24 ragt. Die Montageöffnung 28 kann wie im Ausführungsbeispiel einen kreisförmigen Querschnitt besitzen, es können jedoch auch von der Kreisform abweichende Querschnitte für die Montageöffnung 28 vorteilhaft sein. An der Montageöffnung 28 kann ein Werkzeug wie beispielsweise ein Schraubendreher eingeführt werden, mit dem das Antivibrationselement 19 zur Montage in der Öffnung 31 gegriffen werden kann.

Fig. 3 zeigt das Antivibrationselement 19 in unbelastetem Zustand. Der Dämpfungsabschnitt 25 liegt am Griffgehäuse 11 an. Der Anschlag 27 ist in dieser Stellung noch beabstandet von dem Griffgehäuse 11 und besitzt zum Griffgehäuse 11 einen Abstand b. Bei der in Fig. 3 gezeigten Stellung erfolgt die Vibrationsdämpfung über den Dämpfungsabschnitt 25. Wie Fig. 3 zeigt, besitzt der Dämpfungsabschnitt 25 eine Innenseite 36, die sich unter Belastung an dem Griffgehäuse 11 anlegt.

Fig. 4 zeigt das Antivibrationselement 19 in auseinandergezogenem Zustand von Motorgehäuse 2 und Griffgehäuse 11. In diesem Zustand besitzt das Antivibrationselement 19 zum Griffgehäuse 11 einen Abstand a. Der Abstand b hat sich gegenüber dem unbelasteten Zustand auf einen Abstand b' vergrößert. Die Abstände b und b' sind deutlich größer als der Abstand a. Die Abstände b, b' betragen ein Vielfaches des Abstands a. In diesem Zustand der Motorsäge 1 stellt das Antivibrationselement 19 aufgrund des Abstands a keine Wirkverbindung zwischen dem Motorgehäuse 2 und dem Griffgehäuse 11 her. Bei der in Fig. 4 gezeigten Stellung haben sich das Griffgehäuse 11 und das Motorgehäuse 2 gegenüber dem unbelasteten Zustand voneinander weg bewegt, und zwar um etwas mehr als den Abstand a.

Fig. 5 zeigt das Antivibrationselement 19 in belastetem Zustand. Das Griffgehäuse 11 und das Motorgehäuse 2 haben sich gegenüber dem unbelasteten Zustand aufeinander zu bewegt. Der Anschlag 27 liegt bei der in Fig. 5 gezeigten Stellung an dem Griffgehäuse 11 an. Der Dämpfungsabschnitt 25 hat sich nach außen gestülpt, so dass die Innenseite 36 des Dämpfungsabschnitts 25 an dem Griffgehäuse 11 anliegt. In diesem Zustand erfolgt die Dämpfung über den im Wesentlichen massiv ausgebildeten Grundkörper 24, der ebenfalls eine konische, sich in Richtung auf das Motorgehäuse 2 erweiternde Form besitzt. Die auf das Griffgehäuse 11 zu übertragenden Kräfte werden über den Anschlag 27 und den annähernd flächig am Griffgehäuse 11 anliegenden Dämpfungsabschnitt 25 übertragen. Dadurch ergibt sich ein deutlich abgestuftes, progressives Dämpfungsverhalten in Abhängigkeit davon, ob der Anschlag 27 bereits am Griffgehäuse 11 anliegt oder zu diesem noch beabstandet ist.

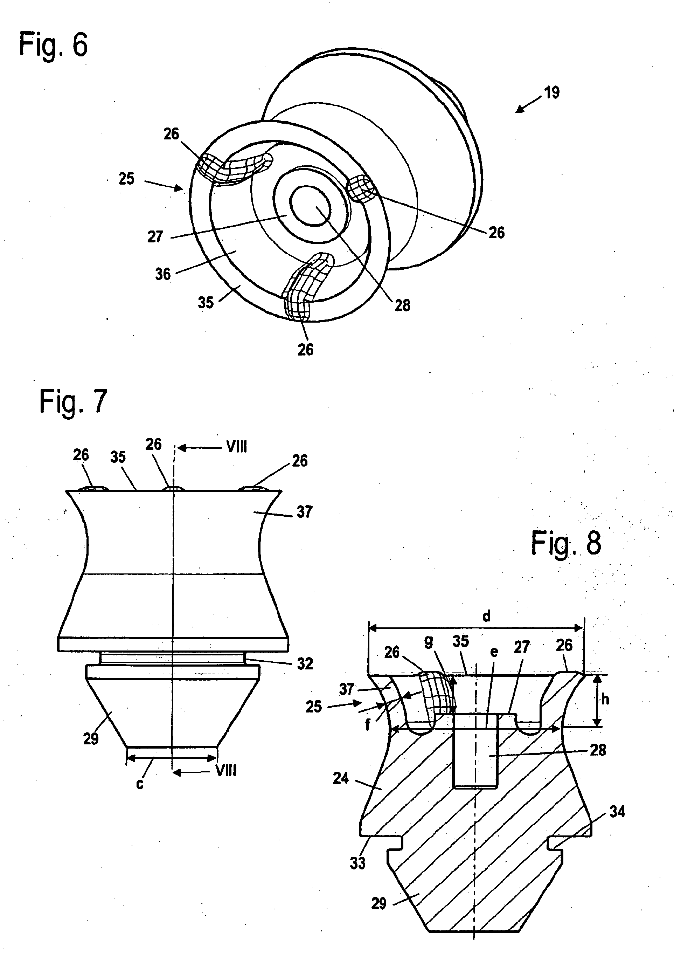

Die Fig. 6 bis 8 zeigen den Aufbau des Antivibrationselements 19 im Einzelnen. Der Dämpfungsabschnitt 25 besitzt an der dem Griffgehäuse 11 zugewandten Seite einen eben ausgebildeten Rand 35, an dem drei Erhöhungen 26 vorgesehen sind. Die Erhöhungen 26 erstrecken sich sowohl am Rand 35 als auch über die gesamte Innenseite 36 des Dämpfungsabschnitts 25. Die Erhöhungen 26 verhindern, dass sich der Dämpfungsabschnitt 25 nach Art eines Saugnapfs an dem Griffgehäuse 11 festsaugt. Wie Fig. 7 zeigt, besitzt der Stutzen 29 an seinem der Nut 32 abgewandten Ende einen Durchmesser c, der kleiner als der in Fig. 4 gezeigte Durchmesser i der Öffnung 31 in der Gehäusewand 30 ist. Dadurch kann der Stutzen 29 leicht in der Öffnung 31 montiert werden.

In Fig. 8 sind die Abmessungen des Antivibrationselements 19 im Einzelnen gezeigt. Der Dämpfungsabschnitt 35 besitzt im Bereich des Randes 35 einen Außendurchmesser d, der größer als ein Außendurchmesser e an der dem Grundkörper 24 zugewandten Seite des Dämpfungsabschnitts 25 ist. Der Außendurchmesser e beträgt vorteilhaft etwa 70% bis etwa 90% des Außendurchmessers d. Als besonders vorteilhaft hat sich eine Größe von etwa 75% bis etwa 85% erwiesen. Der Dämpfungsabschnitt 25 besitzt eine Höhe h, die deutlich kleiner als die Außendurchmesser d und e ist. Die Höhe h beträgt vorteilhaft etwa 20% bis etwa 80% des Außendurchmessers d im Bereich des Rands 35. Besonders vorteilhaft beträgt die Höhe h etwa 30% bis etwa 60%, insbesondere etwa 35% bis etwa 50% des Außendurchmessers d. Der Dämpfungsabschnitt 25 ist demnach vergleichsweise kurz und breit ausgebildet. Die Wand 37 im Dämpfungsabschnitt 25 besitzt eine Wandstärke f, die vorteilhaft etwa 10% bis etwa 30% des Außendurchmessers d beträgt. Als besonders vorteilhaft hat sich ein Verhältnis von Wandstärke f zu Außendurchmesser d von etwa 15% bis etwa 30% erwiesen. Die Wandstärke f ist dabei in einem glatten Bereich der Wand 37 und nicht an einer Erhöhung 26 gemessen. Wie Fig. 8 auch zeigt, liegt der Anschlag 27 in einem vom Dämpfungsabschnitt 25 umschlossenen Bereich in einem Abstand g unterhalb des Rands 35 des Dämpfungsabschnitts 25. Der Abstand g ist dabei etwas kleiner als die Höhe h des Dämpfungsabschnitts 25, so dass der Anschlag 27 in den Dämpfungsabschnitt 25 ragt.

## Patentansprüche

1. Arbeitsgerät mit mindestens einem Handgriff (12) und mit einem Antriebsmotor (3), wobei der Handgriff (12) mit dem Antriebsmotor (3) über mindestens ein Antivibrationselement (16, 17, 18, 19, 20) verbunden ist, wobei das Antivibrationselement (18, 19) an einem ersten Gehäuseteil des Arbeitsgeräts gehalten ist und im Betrieb mit einem zweiten Gehäuseteil des Arbeitsgeräts zusammenwirkt, wobei das Antivibrationselement (18, 19) als Anschlagpuffer wirkt,
**dadurch gekennzeichnet, dass** das Antivibrationselement (19) einen Dämpfungsabschnitt (25) mit einer ringförmigen, sich in Richtung auf das zweite Gehäuseteil erweiternden Wand (37) umfasst, **wobei die Wandstärke (f) und der Öffnungsgrad des Dämpfungsabschnitts (25) so aufeinander abgestimmt sind, dass der Dämpfungsabschnitt (25) sich bei Überschreiten einer konstruktiv vorgegebenen, im Betrieb wirkenden Kraft nach außen wegstülpt, so dass das zweite Gehäuseteil an einer Innenseite (36) der Wand (37) des Dämpfungsabschnitts (25) anliegt, wobei der Dämpfungsabschnitt (25) einen dem zweiten Gehäuseteil zugewandten Rand (35) aufweist, der mindestens eine Erhöhung (26) besitzt, und wobei die Erhöhung (26) zur Anlage an dem zweiten Gehäuseteil ausgebildet ist**.

2. Arbeitsgerät nach Anspruch 1,
**dadurch gekennzeichnet, dass das Antivibrationselement (19) in auseinandergezogenem Zustand der beiden Gehäuseteile einen Abstand zu dem zweiten Gehäuseteil besitzt und keine Wirkverbindung zwischen dem ersten und dem zweiten Gehäuseteil herstellt**.

3. Arbeitsgerät nach Anspruch 1 oder 2,
**dadurch gekennzeichnet, dass** der Außendurchmesser (e) des Dämpfungsabschnitts (25) an der dem ersten Gehäuseteil zugewandten Seite etwa 70% bis etwa 90% des Außendurchmessers (d) an der dem zweiten Gehäuseteil zugewandten Seite beträgt.

4. Arbeitsgerät nach einem der Ansprüche 1 bis 3,
**dadurch gekennzeichnet, dass** die Höhe (h) des Dämpfungsabschnitts (25) etwa 20% bis etwa 80% des Außendurchmessers (d) an der dem zweiten Gehäuseteil zugewandten Seite beträgt.

5. Arbeitsgerät nach einem der Ansprüche 1 bis 4,
**dadurch gekennzeichnet, dass** die Wandstärke (f) des Dämpfungsabschnitts (25) etwa 10% bis etwa 30% des Außendurchmessers (d) an der dem zweiten Gehäuseteil zugewandten Seite beträgt.

6. Arbeitsgerät nach einem der Ansprüche 1 bis 5,
**dadurch gekennzeichnet, dass** das Antivibrationselement (19) in unbelastetem Zustand des Arbeitsgeräts an dem zweiten Gehäuseteil anliegt.

7. Arbeitsgerät nach einem der Ansprüche 1 bis 6,
**dadurch gekennzeichnet, dass** das Antivibrationselement (19) einen Anschlag (27) besitzt, der in unbelastetem Zustand des Arbeitsgeräts zu dem zweiten Gehäuseteil einen Abstand (b) aufweist.

8. Arbeitsgerät nach Anspruch 7,
**dadurch gekennzeichnet, dass** der Anschlag (27) innerhalb des ringförmige Dämpfungsabschnitts (25) angeordnet ist.

9. Arbeitsgerät nach Anspruch 7 oder 8,
**dadurch gekennzeichnet, dass** das Antivibrationselement (19) einen Grundkörper (24) besitzt, an dem der Dämpfungsabschnitt (25) angeformt ist, wobei der Anschlag (27) insbesondere an einem vorstehenden Abschnitt des Grundkörpers (24) ausgebildet ist.

10. Arbeitsgerät nach einem der Ansprüche 7 bis 9,
**dadurch gekennzeichnet, dass** das Antivibrationselement (19) eine Montageöffnung (28) aufweist, wobei die Montageöffnung (28) insbesondere im Bereich des Anschlags (27) angeordnet ist.

11. Arbeitsgerät nach **einem der Ansprüche 1 bis 10,**
**dadurch gekennzeichnet, dass** die Erhöhung (26) sich auch an der Innenseite (36) der Wand (37) des Dämpfungsabschnitts (35) erstreckt.

12. Arbeitsgerät nach **einem der Ansprüche 1 bis 11**,
**dadurch gekennzeichnet, dass** drei über den Umfang verteilt angeordnete Erhöhungen (26) vorgesehen sind.

13. Arbeitsgerät nach einem der Ansprüche 1 bis **12,**
**dadurch gekennzeichnet, dass** das Antivibrationselement (19) einteilig ausgebildet ist und aus einem elastischen Material besteht.

14. Arbeitsgerät nach einem der Ansprüche 1 bis **13,**
**dadurch gekennzeichnet, dass** das Antivibrationselement (19) an der dem Dämpfungsabschnitt (25) gegenüberliegenden Seite einen Stutzen (29) aufweist, mit dem das Antivibrationselement (19) in eine Öffnung (31) des ersten Gehäuseteils eingeknüpft ist.

## Claims

1. Working implement, comprising at least one handle (12) and a drive motor (3), wherein the handle (12) is joined to the drive motor (3) via at least one anti-vibration element (16, 17, 18, 19, 20), wherein the anti-vibration element (18, 19) is held on a first housing part of the working implement and in operation acts together with a second housing part of the working implement, wherein the anti-vibration element (18, 19) acts as a stop buffer,
**characterised in that** the anti-vibration element (19) comprises a damping section (25) with an annular wall (37) expanding towards the second housing part, wherein the wall thickness (f) and the degree of opening of the damping section (25) are matched to one another in such a way that the damping section (25) turns away to the outside when a constructively predetermined force acting in operation is exceeded, so that the second housing part bears against an inside (36) of the wall (37) of the damping section (25), wherein the damping section (25) has an edge (35) facing the second housing part and having at least one raised area (26), and wherein the raised area (26) is designed for contacting the second housing part.

2. Working implement according to claim 1,
**characterised in that** the anti-vibration element (19) has a distance from the second housing part if the two housing parts are pulled apart and does not establish an active connection between the first and the second housing part.

3. Working implement according to claim 1 or 2,
**characterised in that** the outer diameter (e) of the damping section (25) is on the side facing the first housing part approximately 70% to approximately 90% of the outer diameter (d) on the side facing the second housing part.

4. Working implement according to any of claims 1 to 3,
**characterised in that** the height (h) of the damping section (25) is approximately 20% to approximately 80% of the outer diameter (d) on the side facing the second housing part.

5. Working implement according to any of claims 1 to 4,
**characterised in that** the wall thickness (f) of the damping section (25) is approximately 10% to approximately 30% of the outer diameter (d) on the side facing the second housing part.

6. Working implement according to any of claims 1 to 5,
**characterised in that** the anti-vibration element (19) bears against the second housing part in the no-load condition of the working implement.

7. Working implement according to any of claims 1 to 6,
**characterised in that** the anti-vibration element (19) has a stop (27) which is at a distance (b) from the second housing part in the no-load condition of the working implement.

8. Working implement according to claim 7,
**characterised in that** the stop (27) is located within the annular damping section (25).

9. Working implement according to claim 7 or 8,
**characterised in that** the anti-vibration element (19) has a base body (24) on which the damping section (25) is integrally formed, the stop (27) being in particular formed on a protruding section of the base body (24).

10. Working implement according to any of claims 7 to 9,
**characterised in that** the anti-vibration element (19) has a mounting opening (28), the mounting opening (28) being in particular located in the region of the stop (27).

11. Working implement according to any of claims 1 to 10,
**characterised in that** the raised area (26) also extends on the inside (36) of the wall (37) of the damping section (35).

12. Working implement according to any of claims 1 to 11,
**characterised in that** three raised areas (26) distributed along the circumference are provided.

13. Working implement according to any of claims 1 to 12,
**characterised in that** the anti-vibration element (19) is designed as a single part and made of an elastic material.

14. Working implement according to any of claims 1 to 13,
**characterised in that** the anti-vibration element (19) has a connecting piece (29) with which the anti-vibration element (19) is tied into an opening (31) of the first housing part on the side opposite the damping section (25).

## Revendications

1. Appareil de travail avec au moins une poignée (12) et avec un moteur d'entraînement (3), étant précisé que la poignée (12) est reliée au moteur d'entraînement (3) par l'intermédiaire d'au moins un élément antivibration (16, 17, 18, 19, 20), que l'élément antivibration (18, 19) est fixé à un premier élément de boîtier de l'appareil et, en fonctionnement, coopère avec un deuxième élément de boîtier de l'appareil, et que l'élément antivibration (18, 19) agit comme un tampon de butée, **caractérisé en ce que** l'élément antivibration (19) comprend une partie d'amortissement (25) avec une paroi annulaire (37) qui va en s'élargissant en direction du deuxième élément de boîtier, étant précisé que l'épaisseur de paroi (F) et le degré d'ouverture de la partie d'amortissement (25) sont adaptés l'un à l'autre de telle sorte que la partie d'amortissement (25) s'étale vers l'extérieur lors du dépassement d'une force, prédéfinie par la construction, qui agit en fonctionnement, de sorte que le deuxième élément de boîtier est appliqué contre un côté intérieur (36) de la paroi (37) de la partie d'amortissement (25), étant précisé que la partie d'amortissement (25) comporte un bord (35), tourné vers le deuxième élément de boîtier, qui présente au moins une bosse (26), et étant précisé que la bosse (26) est conçue pour être appliquée contre le deuxième élément de boîtier.

2. Appareil de travail selon la revendication 1,
**caractérisé en ce que** l'élément antivibration (19), à l'état séparé des deux éléments de boîtier, présente un écartement par rapport au deuxième élément de boîtier et ne réalise pas de liaison fonctionnelle entre les premier et deuxième éléments de boîtier.

3. Appareil de travail selon la revendication 1 ou 2,
**caractérisé en ce que** le diamètre extérieur (e) de la partie d'amortissement (25) sur le côté tourné vers le premier élément de boîtier représente environ 70% à environ 90% du diamètre extérieur (d) sur le côté tourné vers le deuxième élément de boîtier.

4. Appareil de travail selon l'une des revendications 1 à 3,
**caractérisé en ce que** la hauteur (h) de la partie d'amortissement (25) représente environ 20% à environ 80% du diamètre extérieur (d) sur le côté tourné vers le deuxième élément de boîtier.

5. Appareil de travail selon l'une des revendications 1 à 4,
**caractérisé en ce que** l'épaisseur de paroi (f) de la partie d'amortissement (25) représente environ 10% à environ 30% du diamètre extérieur (d) sur le côté tourné vers le deuxième élément de boîtier.

6. Appareil de travail selon l'une des revendications 1 à 5,
**caractérisé en ce que** l'élément antivibration (19), à l'état non contraint de l'appareil, est appliqué contre le deuxième élément de boîtier.

7. Appareil de travail selon l'une des revendications 1 à 6,
**caractérisé en ce que** l'élément antivibration (19) comporte une butée (27) qui, à l'état non contraint de l'appareil, présente un écartement (b) par rapport au deuxième élément de boîtier.

8. Appareil de travail selon la revendication 7,
**caractérisé en ce que** la butée (27) est disposée à l'intérieur de la partie d'amortissement annulaire (25).

9. Appareil de travail selon la revendication 7 ou 8,
**caractérisé en ce que** l'élément antivibration (19) comporte un corps de base (24) sur lequel est rapportée une partie d'amortissement (25), étant précisé que la butée (27) est formée en particulier sur une partie saillante du corps de base (24).

10. Appareil de travail selon l'une des revendications 7 à 9,
**caractérisé en ce que** l'élément antivibration (10) présente une ouverture de montage (28), étant précisé que l'ouverture de montage (28) est disposée en particulier dans la zone de la butée (27).

11. Appareil de travail selon l'une des revendications 1 à 10,
**caractérisé en ce que** la bosse (26) s'étend aussi sur le côté intérieur (36) de la paroi (37) de la partie d'amortissement (35).

12. Appareil de travail selon l'une des revendications 1 à 11,
**caractérisé en ce qu'**il est prévu trois bosses (26), réparties sur la circonférence.

13. Appareil de travail selon l'une des revendications 1 à 12,
**caractérisé en ce que** l'élément antivibration (19) est formé d'une seule pièce et se compose d'un matériau élastique.

14. Appareil de travail selon l'une des revendications 1 à 13,
**caractérisé en ce que** l'élément antivibration (19) comporte, sur le côté opposé à la partie d'amortissement (25), un embout (29) avec lequel ledit élément antivibration (19) est enfoncé dans une ouverture (31) du premier élément de boîtier.
